# EUROPÄISCHE PATENTANMELDUNG

(11) **EP 0 624 548 A1**
(43) Veröffentlichungstag der Anmeldung: **17.11.1994**
(21) Anmeldenummer: 94201089.3
(22) Anmeldetag: 21.04.1994
(51) Int. Cl.: C01B 11/02

(54) **Verfahren und Vorrichtung zum Einleiten von Alkalichlorat und Säure in einen Reaktor zum Erzeugen von Chlordioxid**

(30) Priorität: 13.05.1993 DE 4316074
(71) Anmelder: METALLGESELLSCHAFT AG, D-60323 Frankfurt am Main (DE)
(72) Erfinder: Ali, Dr. Metwalli, D-61184 Karben (DE); Jedlicka, Gerhard, D-65779 Kelkheim (DE)

(57) **Zusammenfassung**

Die Umsetzung von Alkalichlorat-Lösung mit einer Säure, z. B. Salzsäure, zum Erzeugen eines gasförmigen Gemisches aus Chlordioxid und Chlor erfolgt in einem Reaktor mit einer oder mehreren Reaktionsetagen. Zunächst werden die Alkalichlorat-Lösung und die Säure gemeinsam durch eine Mischkammer geleitet. Das dabei entstehende Lösungsgemisch wird aus der Mischkammer in die oberste Reaktionsetage des Reaktors geleitet.

## Beschreibung

Die Erfindung betrifft ein Verfahren zum Umsetzen von Alkalichlorat-Lösung mit einer Säure zum Erzeugen eines gasförmigen Gemisches aus Chlordioxid und Chlor in einem Reaktor mit einer oder mehreren Reaktionsetagen, die ein Alkalichlorat und Säure enthaltendes Lösungsgemisch aufweisen, sowie einen Reaktor hierzu.

Dieses Verfahren und die zugehörigen Reaktoren sind aus dem US-Patent 4 851 198 und dem dazu korrespondierenden Europa-Patent 0 227 181, aus DE-A-37 19 878 sowie aus dem US-Patent 4 938 944 und dem dazu korrespondierenden Europa-Patent 0 345 863 bekannt. Diese Reaktoren besitzen mehrere übereinander angeordnete, gasdurchlässige Böden, wobei jeder Boden eine Reaktionsetage definiert. Von unten wird Strippluft durch die Reaktionsetagen geleitet, um das gasförmige ClO₂, das noch Cl₂ enthält, aus dem Reaktor auszutragen, wodurch das Entstehen einer explosiven Chlordioxidkonzentration vermieden wird. Die Alkalichlorat-Lösung kann z.B. in einer Elektrolyse erzeugt sein.

Das Alkalichlorat wird üblicherweise mit Salzsäure umgesetzt, wobei folgende Reaktionen ablaufen:

NaClO₃ + 2 HCl --> ClO₂ + 1/2 Cl₂ + NaCl + H₂O (1)

NaClO₃ + 6 HCl --> 3 Cl₂ + NaCl + 3 H₂O (2)

Wichtig ist hierbei, die Nebenreaktion (2), bei welcher kein ClO₂ gebildet wird, möglichst zu unterdrücken. Der Erfindung liegt die Aufgabe zugrunde, dies auf möglichst betriebssichere Weise zu erreichen.

Die Aufgabe wird beim eingangs genannten Verfahren erfindungsgemäß dadurch gelöst, daß man die Alkalichlorat-Lösung und die Säure gemeinsam durch eine Mischkammer leitet und aus der Mischkammer ein Lösungsgemisch in die oberste Reaktionsetage des Reaktors leitet. Die Säure, üblicherweise Salzsäure, und die Alkalichlorat-Lösung reagieren nur relativ langsam miteinander, deshalb wird durch die gezielte Vermischung in der Mischkammer die Reaktionsgeschwindigkeit deutlich erhöht. Örtlich unterschiedliche Säurekonzentrationen werden vermieden, was die Cl₂-Erzeugung verringert. Der Wirkungsgrad des Reaktors wird dadurch erheblich verbessert.

Der Reaktor zur Durchführung des Verfahrens weist eine Mischkammer mit Zufuhrleitungen für Alkalichlorat-Lösung und für Säure auf, wobei der Flüssigkeits-Auslaß der Mischkammer in die oberste Reaktionsetage des Reaktors mündet. Der Reaktor ist üblicherweise nur mit einer Mischkammer ausgestattet, wodurch der apparative Aufwand zum Zuführen von Chlorat und Säure auf einem Minimum gehalten wird. Bekannte Reaktoren weisen demgegenüber eine größere Anzahl von Einspeiseleitungen für Säure auf, um die möglichst gleichmäßige Verteilung der Säure im Lösungsgemisch der Reaktionsetagen zu erreichen.

Ausgestaltungsmöglichkeiten des Verfahrens und der Vorrichtung werden mit Hilfe der Zeichnung erläutert. Es zeigt:
- Fig. 1: einen Längsschnitt durch den schematisch dargestellten Reaktor und
- Fig. 2: einen Längsschnitt durch eine Ausführungsform der Mischvorrichtung in schematischer Darstellung.

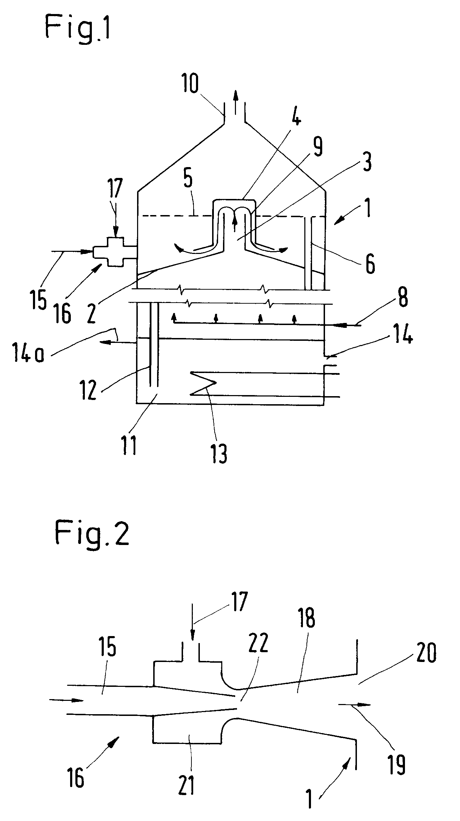

Beim Reaktor der Fig. 1 ist nur die oberste Reaktionsetage (1) dargestellt, zu welcher der Boden (2) gehört. Der Boden hat die Form eines umgekehrten Trichters, er weist einen zentralen Gaskanal (3) und eine im Abstand über dem Kanal angeordnete Gasführungsglocke (4) auf. Der Flüssigkeitsstand über dem Boden (2) ist durch die gestrichelte Linie (5) angedeutet, Flüssigkeit fließt durch das Überlaufrohr (6) nach unten ab. Üblicherweise sind mehrere Reaktionsetagen übereinander angeordnet. Der Reaktor und seine Einbauten sind üblicherweise aus Titan hergestellt.

Ein Spülgas, z.B. Luft, wird durch die Leitung (8) in die unterste Reaktionsetage eingeleitet und strömt aufwärts durch den Gaskanal (3) und den Zwischenraum zwischen dem Kanal (3) und der Glocke (4), wie das durch die gebogenen Pfeile (9) angedeutet ist. Gasförmiges, ClO₂-haltiges Produkt wird zusammen mit dem Strippgas durch die Öffnung (10) aus dem Reaktor entfernt. Den untersten Bereich des Reaktors bildet eine Aufkochkammer (11), in welche von oben kommende, verbrauchte Lösung durch die Überlaufleitung (12) eintritt. Durch eine Heizvorrichtung (13) wird die Lösung zum Sieden erhitzt und verläßt die Kammer (11) durch den Abzug (14), Brüden werden durch die Leitung (14a) abgezogen.

Alkalichlorat-Lösung wird durch die Leitung (15) herangeführt, tritt zunächst in die Mischvorrichtung (16) ein und wird dort zumindest teilweise mit Salzsäure aus der Leitung (17) gemischt. Einzelheiten der ejektorartig ausgeführten Mischvorrichtung sind in Fig. 2 dargestellt. Die Mischvorrichtung der Fig. 2 weist eine konische Mischkammer (18) auf, die vom Flüssigkeitsgemisch in Richtung des Pfeils (19) durchströmt wird, wobei die Flüssigkeit durch den Auslaß (20) in die oberste Reaktionsetage (1) des Reaktors eintritt. Der Auslaß (20) befindet sich in kurzer Entfernung über dem Boden (2) unterhalb des Flüssigkeitsspiegels (5), vgl. Fig. 1.

Die Säure wird durch die Leitung (17) herangeführt und tritt zunächst in eine Ringkammer (21) ein, welche das konisch verengte Ende der Leitung (15) umgibt. Durch einen Ringspalt (22) gelangt die Säure in die Mischkammer (18) und strömt dann unter Vermischung mit der Chloratlösung aus der Leitung (15) in die Reaktionsetage (1). Die Mischkammer (18) hat zumeist eine Länge von etwa 20 bis 80 cm, damit die beginnende Umsetzung des Chlorats mit der Säure nicht zu Störungen führt. Die Strömungsgeschwindigkeit in der Mischkammer (18) liegt üblicherweise im Bereich von 1 bis 3 m/s, das Volumenverhältnis an zugeführter Chlorat- und HCl-Lösung wird zumeist bei 2 : 1 bis 4 : 1 liegen. Als Material für die Mischvorrichtung (16) eignet sich beispielsweise Polytetrafluorethylen.

### Beispiel

In einem Reaktor gemäß Fig. 1 mit 6 Reaktionsetagen und einem Durchmesser von 3,8 m werden pro Stunde 1,44 t ClO₂ erzeugt. Der Mischvorrichtung (16) gemäß Fig. 2 führt man 5 m³/h Salzsäure mit 370 g HCl pro Liter durch die Leitung (17) und 12,3 m³/h einer wässrigen Natriumchlorat-Lösung mit 500 g NaClO₃ pro Liter zu. Die Säure und die Chloratlösung haben eine Temperatur von 40°C, der Druck in der Leitung (15) beträgt 3 bar und in der Leitung (17) 0.6 bar. Die Mischkammer (18) weist eine Länge von 35 cm, einen kleinsten Innendurchmesser von 1,4 cm und einen größten Innendurchmesser von 5,5 cm auf. Durch die Leitung (8) wird dem Reaktor Spülluft in einer Menge von 1800 Nm³/h zugeführt. Zusammen mit dem ClO₂ und der Spülluft führt man durch die Öffnung (10) aus dem Reaktor pro Stunde 315 Nm³ Cl₂ ab.

Wenn man auf die Mischvorrichtung (16) verzichtet und bei sonst ungeänderten Bedingungen die Leitungen (15) und (17) direkt in den Reaktor führt, werden pro Stunde nur 1,25 t ClO₂ und dabei 350 Nm³ Cl₂ produziert.

## Patentansprüche

1. Verfahren zum Umsetzen von Alkalichlorat-Lösung mit einer Säure zum Erzeugen eines gasförmigen Gemisches aus Chlordioxid und Chlor in einem Reaktor mit einer oder mehreren Reaktionsetagen, die ein Alkalichlorat und Säure enthaltendes Lösungsgemisch aufweisen, dadurch gekennzeichnet, daß man die Alkalichlorat-Lösung und die Säure gemeinsam durch eine Mischkammer leitet und aus der Mischkammer ein Lösungsgemisch in die oberste Reaktionsetage des Reaktors leitet.

2. Reaktor zum Umsetzen von Alkalichlorat-Lösung mit einer Säure zum Erzeugen eines gasförmigen Gemisches aus Chlordioxid und Chlor, wobei der Reaktor eine oder mehrere Reaktionsetagen aufweist, gekennzeichnet durch eine mit dem Reaktor verbundene Mischkammer mit Zufuhrleitungen für Alkalichlorat-Lösung und für Säure, wobei die Mischkammer einen Flüssigkeits-Auslaß aufweist, der in die oberste Reaktionsetage des Reaktors mündet.

3. Reaktor nach Anspruch 2, dadurch gekennzeichnet, daß zwischen der Mischkammer und einer Zufuhrleitung eine die andere Zufuhrleitung umgebende Ringkammer angeordnet ist, wobei die Ringkammer einen Flüssigkeits-Durchlaß zur Mischkammer hin aufweist.

4. Reaktor nach Anspruch 2 oder 3, dadurch gekennzeichnet, daß sich die Mischkammer zum Reaktor hin konisch erweitert.
